# EUROPÄISCHE PATENTANMELDUNG

(11) **EP 1 283 436 A2**
(43) Veröffentlichungstag der Anmeldung: **12.02.2003**
(21) Anmeldenummer: 02016933.0
(22) Anmeldetag: 01.08.2002
(51) Int. Cl.: G02F 1/15

(54) **Verbundglasscheibe und Primerschichten für EC-Fenster**

(30) Priorität: 01.08.2001 DE 10137544
(71) Anmelder: BASF AKTIENGESELLSCHAFT, 67056 Ludwigshafen (DE)
(72) Erfinder: Bronstert, Bernd, Dr., 67166 Otterstadt (DE)
(74) Vertreter: Isenbruck, Günter, Dr.

(57) **Zusammenfassung**

Die vorliegende Erfindung betrifft Verbundkörper umfassend mindestens eine Schicht A, die wenigstens einen Festelektrolyten A1 enthält, mindestens eine haftvermittelnde Schicht B mit einer Dicke < 100µm und mindestens eine Komponente C, die dem Verbundkörper elektrochrome Eigenschaften verleiht, wobei derartige Verbundkörper insbesondere für die Verwendung in elektrochromen Fenstern geeignet sind, sowie elektrochrome Fenster und Verglasungen umfassend einen solchen Verbundkörper und Verfahren zur Herstellung dieser Verbundkörper.

## Beschreibung

Die vorliegende Erfindung betrifft Verbundkörper, die insbesondere für die Verwendung in elektrochromen Fenstern geeignet sind, sowie elektrochrome Fenster und Verglasungen umfassend einen solchen Verbundkörper und Verfahren zur Herstellung dieser Verbundkörper.

Optisch transparente polymere Festelektrolyte sind prinzipiell bekannt. Sie finden insbesondere Anwendung in elektrochromen Systemen, beispielsweise in elektrochromen Verglasungen. In elektrochromen Verglasungen kann die Lichtdurchlässigkeit durch Anlegen elektrischer Potentiale reversibel und stufenlos geregelt werden. Der Aufbau derartiger Systeme ist beispielsweise in EP-A 461 685, DE-A 36 43 690 oder US 5,244,557 beschrieben. Typischerweise weist eine elektrochrome Verglasung folgende Schichtreihenfolge auf: Glasscheibe - transparente elektrisch leitende Schicht - elektrochrome Elektrode - Elektrolyt - Gegenelektrode - transparente elektrisch leitende Schicht - Glasscheibe.

Elektrochrome Funktionsschichten werden beispielsweise in Material Research, Vol. 2, No. 1 (1999), S. 1 bis 9 beschrieben.

Festelektrolyte übernehmen in diesen Systemen die Aufgabe, je nach der Polarität des angelegten elektrischen Feldes, Kationen zur elektrochromen Elektrode hin oder von der Elektrode weg zu transportieren. Die elektrochrome Elektrode ändert durch diesen Prozess ihre Farbe. Für die Anwendung in elektrochromen Systemen geeignete Festelektrolyte müssen eine Vielzahl unterschiedlicher Anforderungen erfüllen. Sie müssen eine hohe elektrische Leitfähigkeit und vorzugsweise auch optische Transparenz im sichtbaren Spektralbereich besitzen, und sie müssen ausserdem in einem weiten Temperaturbereich ohne Einbußen ihrer optischen, elektrischen und mechanischen Eigenschaften einsetzbar sein.

EP-A 461 685 und EP-A 499 115 offenbaren Festelektrolyten mit polaren Polymeren auf Basis von Polyethylenoxid, Polyethylenoxid Copolymeren oder Propfcopolymeren und mit in diesen polaren Polymeren löslichen Leitsalzen, insbesondere Li-Salzen. Die Festelektrolyte werden hergestellt, indem die Ausgangsmaterialien in geeigneten organischen Lösungsmitteln gelöst, die Substrate damit beschichtet und das Lösungsmittel wieder verdampft wird.

US 5,244,557 offenbart eine elektrochrome Verglasung mit einem Elektrolyten aus Polyethylenoxid und P₂O₅. Die einzelnen Schichten der elektrochromen Verglasung werden hier beispielsweise bei hohen Temperaturen und hohem Druck miteinander verbunden.

Aus der EP-A 1 056 097 sind optisch transparente Festelektrolyte bekannt, die aus einem polymeren Bindemittel, einem Füllstoff, einem Leitsalz und einem Ionen solvatisierenden Weichmacher aufgebaut sind. In der EP-A 1 056 097 wird ebenfalls die Verwendung derartiger Festelektrolyte in elektrochromen Systemen und Displays erwähnt. Hierbei muss der Festelektrolyt, insbesondere das im Festelektrolyt enthaltene polymere Bindemittel, auf die elektrochrome Funktionsschicht abgestimmt werden, um die Funktion des elektrochromen Fensters zu gewährleisten.

Ausgehend von diesem Stand der Technik lag eine Aufgabe der vorliegenden Erfindung darin, Verbundkörper bereitzustellen, die als elektrochrome Fenster verwendet werden können, wobei gleichzeitig eine breite Auswahl an polymeren Bindemitteln für die Festelektrolytschicht eingesetzt werden kann.

Erfindungsgemäß wird diese Aufgabe gelöst durch einen Verbundkörper, umfassend
A) mindestens eine Schicht A wenigstens enthaltend einen Festelektrolyten A1, der mindestens folgende Komponenten enthält:
   i) mindestens einen Füllstoff I mit einer Primärpartikelgröße von 1 nm bis 20 µm,
   ii) mindestens ein polymeres Bindemittel II,
B) mindestens eine haftvermittelnde Schicht B mit einer Dicke < 100 µm;
C) mindestens eine Komponente C, die dem Verbundkörper elektrochrome Eigenschaften verleiht.

Unter elektrochromen Eigenschaften wird im Rahmen der vorliegenden Erfindung verstanden, dass ein erfindungsgemäßer Verbundkörper bei Anlegen einer Spannung eine Veränderung der Lichtabsorption, insbesondere im sichtbaren Bereich, zeigt.

Es ist erfindungsgemäß bevorzugt, dass die mindestens eine Komponente C im Verbundkörper in einer Schicht CI vorliegt.

Die erfindungsgemäße Schicht CI kann beispielsweise aufgedampft werden. Sofern die Schicht CI nasschemisch aufgebracht wird, beispielsweise mittels Tauchverfahren oder Sol-Gel-Verfahren, kann sie neben der mindestens einen Komponente C weitere dem Fachmann bekannte Zusatzstoffe und Hilfsmittel enthalten.

Derartige Zusatzstoffe und Hilfsmittel sind beispielsweise Bindemittel, Fällungsmittel oder auch Verlaufshilfsmittel.

Im Rahmen der vorliegenden Erfindung ist es jedoch ebenso möglich, dass die Komponente C beispielsweise in der Schicht A enthalten ist.

Sofern die Komponente C in der Schicht A enthalten ist, sind besonders solche Verbindungen als Komponente C bevorzugt, die in verschiedenen Oxidationsstufen eine unterschiedliche Lichtabsorption, insbesondere im sichtbaren Bereich, aufweisen und reversibel von einer in die andere Oxidationsstufe überführt werden können. Beispielsweise sind Verbindungen geeignet, die in einer Oxidationsstufe farblos und in einer zweiten gefärbt sind. Derartige Verbindungen sind beispielsweise Dihydrophenazine oder ähnlich Verbindungen, wie in der US 6,249,369 oder US 5,278,693 beschrieben.

Durch die erfindungsgemäße haftvermittelnde Schicht B kann die Haftung unabhängig von dem polymeren Bindemittel II eingestellt werden, so dass eine größere Anzahl von polymeren Bindemitteln für den erfindungsgemäßen Festelektrolyten A1 eingesetzt werden kann. Außerdem verhindert die haftvermittelnde Schicht B einen direkten Kontakt des polymeren Bindemittels II mit der Schicht CI, so dass auch polymere Bindemittel eingesetzt werden können, die bei einem Schichtaufbau bei direktem Kontakt mit der Schicht CI oder bei cyclischer Strombelastung instabil wären.

Für die Verwendung in elektrochromen Systemen eignen sich insbesondere solche Festelektrolyten A1, die optisch transparent sind.

Daher betrifft die vorliegende Erfindung in einer bevorzugten Ausführungsform einen Verbundkörper umfassend einen Festelektrolyt A1, der mindestens eine der Eigenschaften (1) bis (3) aufweist:
(1) Lichtabsorption <20%,
(2) Leitfähigkeit bei 20 °C größer als 10⁻⁷ S/cm,
(3) Glasübergangstemperatur Tg < -30°C.

Im Rahmen der vorliegenden Erfindung ist es insbesondere bevorzugt, dass der Festelektrolyt A1 alle der Eigenschaften (1) bis (3) erfüllt.

Die Leitfähigkeit bei 20 °C des Festelektrolyten A1 ist erfindungsgemäß bevorzugt größer als 10⁻⁷ S/cm, insbesondere größer als 10⁻⁵ S/cm.

Der erfindungsgemäße Festelektrolyt A1 enthält erfindungsgemäß einen Füllstoff I mit einer Primärpartikelgröße von 1 nm bis 20 µm, beispielsweise von 1 nm bis 1000 nm, insbesondere von 1 nm bis 500 nm, bevorzugt von 1 nm bis 300 nm, besonders bevorzugt von 1 nm bis 100 nm oder auch 5 bis 10 nm.

Bei runden oder annähernd runden Partikeln bezieht sich diese Angabe auf den Durchmesser, bei unregelmäßig geformten, wie beispielsweise bei nadelförmigen Partikeln auf die längste Achse. Erfindungsgemäß wird bevorzugt ein sehr feinteiliger Feststoff eingesetzt, wobei die Primärpartikelgröße im Bereich der Wellenlänge des sichtbaren Lichts liegt, damit ein optisch transparenter Festelektrolyt erhalten wird.

Geeignete Füllstoffe sind beispielsweise Polymerpartikel, die auch vernetzt sein können, wie solche aus Polystyrol, Polycarbonat oder Polymethylmethycrylat (z.B. Agfaperl®). Weiterhin geeignet sind insbesondere anorganische Füllstoffe mit einer Primärpartikelgröße von 1 bis 300 nm. Beispiele für geeignete anorganische Füllstoffe sind Glasmehl, Nanoglaspartikel, wie beispielsweise Monospher® (Fa. Merck), Mikroglaspartikel, wie beispielsweise Spheriglas® (FA. Potters-Ballotini). Weiterhin geeignet sind anorganische Oxide und Mischoxide insbesondere der Elemente Silicium, Aluminium, Magnesium, Titan oder Calcium. Beispiele derartiger Füllstoffe sind Siliciumdioxid, insbesondere pyrogene Oxide, wie beispielsweise Aerosil® (Fa. Degussa), Silikate, wie beispielsweise Talk, Pyrophyllit, Wollastonit, Alumosilikate wie beispielsweise Feldspäte oder Zeolithe. Die Füllstoffe können auch mit geeigneten Dispergierhilfsmitteln, Haftvermittlern oder Hydrophobierungsmitteln belegt sein. Es können auch Gemische zweier oder mehrerer Füllstoffe eingesetzt werden. Besonders bevorzugt sind hydrophobierte pyrogene Kieselgelsäuren, wie beispielsweise Aerosil® R812, Aerosil® R8200, Aerosil® R974.

Die vorliegende Erfindung betrifft daher in einer weiteren Ausführungsform einen Verbundkörper, wobei der Füllstoff I ein anorganischer Füllstoff mit einer Primärpartikelgröße von 1 nm bis 300 nm ist.

Üblicherweise ist der Füllstoff I in einer Menge von 1 bis 80 Gew.-% bezogen auf die Summe aller Bestandteile des Festelektrolyten A1 enthalten. Bevorzugt enthält der Festelektrolyt A1 8 bis 78 Gew.-% des Füllstoffes I, besonders bevorzugt 10 bis 67 Gew.-%, insbesondere 20 bis 50 Gew.-%.

Als polymeres Bindemittel II eignen sich prinzipiell alle thermoplastisch verarbeitbaren Polymere mit ausreichender Transparenz. Insbesondere geeignet sind solche Thermoplasten, die im UV/VIS-Bereich eine Lichtabsorption von weniger als 20 % aufweisen. Beispiele für geeignete Polymere sind Polyacrylate, insbesondere solche aus Acrylsäure- oder Methacrylsäureestern der allgemeinen Formel H₂C=CHR¹-COOR², wobei R¹ für Methyl oder Wasserstoff steht und R² für geradkettige, verzweigte oder cyclische Kohlenwasserstoffreste, wie beispielsweise Methyl-, Ethyl-, n-Propyl, iso-Propyl-, n-Butyl-, iso-Butyl-, sec-Butyl, tert.-Butyl-, n-Amyl-, iso-Amyl-, sec.-Amyl-, tert.-Amyl-, Neopentyl-, n-Hexyl-, n-Heptyl-, n-Octyl-, 2-Ethylhexyl-, n-Nonyl-, iso-Nonyl-, n-Decyl-, n-Undecyl-, n-Dodecyl-, Cyclohexyl-, 3,3,5-Trimethylcyclohexyl-, Isobornyl-, Vinyl- oder Allyl-Gruppen. In einer besonderen Ausführungsform können die R²-Reste auch einen oder mehrere Substituenten tragen, insbesondere Chlor oder Fluor. Beispiele dafür sind 2,2,2-Trifluroethyl-, 2,2,3,3-Tetrafluoropropyl oder 1,1,1,3,3,3,-Hexafluoroisopropyl-Gruppen. Es können auch Gemische zweier oder mehrerer Acrylate eingesetzt werden. Darüber hinaus eignen sich auch optisch transparente Polymere wie beispielsweise Ethylenvinylacetat (EVA), modifizierte und unmodifizierte Polyvinylalkohole, Polyvinylchlorid (PVC) oder Polystyrol.

Als polymeres Bindemittel II können auch Copolymere von Acrylaten mit einem oder mehreren Comonomeren eingesetzt werden. Als Comonomere kommen insbesondere in Frage:
- Acrylsäure- und Methacrylsäureamide. Als Substituenten am Amidstickstoff von Acryl- oder Methacrylamid kommen neben Wasserstoff die oben unter R² genannten Gruppen in Betracht. Es können auch geeignete Imide, beispielsweise Maleinsäureimid eingesetzt werden.
- Acryl- oder Methacrylnitril.
- Styrolderivate der allgemeinen Formel (1): 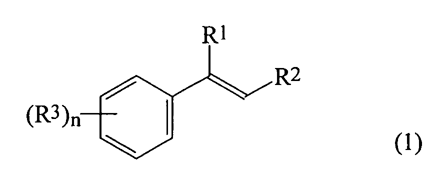 Der Rest R¹ steht vorzugsweise für Wasserstoff oder Methyl, die Reste R² und R³ bezeichnen vorzugsweise Wasserstoff oder Kohlenwasserstoffreste. Bevorzugt als Comonomer ist Styrol.
- Geradkettige, verzweigte und/oder cyclische C2- bis C20-Olefine, wie Ethylen, Propylen, 1-Butylen, 2-Butylen, Butadien, Isopren, 1-Penten, 2-Penten, 3-Penten, 1-Hexen, 2-Hexen, 3-Hexen, 2,4-Hexadien, Heptene, Octene, Nonene, Decene, Cyclohexen und Norbonen. Bevorzugt als Comonomer sind Ethylen, Propylen und 1-Butylen.

Besonders bevorzugt kommen als thermoplastisch verarbeitbare Bindemittel solche Polymere in Frage, die üblicherweise zur Herstellung optischer Bauelemente aus Kunststoffen eingesetzt werden. Derartige Polymere und ihre Eigenschaften sind beispielsweise in "Optical Plastics" (Ullmann's Encyclopedia of Industrial Chemistry, 6^{th} Edition, 1998, Electronic Release) dargestellt. Beispiele derartiger Polymere sind Polymethylmethacrylat, Polycyclohexylmethacrylat, Copolymere aus Cyclohexylmethacrylat und Methylmethacrylat, Copolymere aus Cyclohexylmethacrylat und/oder Methylmethacrylat und Styrol, Polystyrol, Styrol-Acrylnitril-Copolymerisate, Copolymerisate aus Styrol und Maleinsäureanhydrid, Polycarbonate wie beispielsweise solche aus Bisphenol A und Phosgen, Polyvinylbutyral, teil- oder vollhydrolysiertes Polyvinylacetat/Polyvinylalkohol bzw. deren Copolymere wie beispielsweise Ethylen/Polyvinylacetat-Copolymere, Diphenylsulfidcarbonat, Polytrifluormethylstyrol, Polymethylpenten oder Celluloseester wie beispielsweise Celluloseacetat, Cellulosepropionat oder Celluloseacetobutyrat. Einsetzbar sind auch geeignete thermoplastische Polyurethane, Polyolefine oder Polyester wie Polyethylenterephthalat oder Polybutylenterephthalat.

Es können im Rahmen der vorliegenden Erfindung auch Gemische von zwei oder mehreren verschiedenen polymeren Bindemitteln eingesetzt werden, vorausgesetzt, die Polymere sind miteinander verträglich. Das Molekulargewicht der Polymeren kann je nach den gewünschten Eigenschaften des Festelektrolyten gewählt werden. Bevorzugt sollte die Glasübergangstemperatur des eingesetzten Polymeren kleiner als -30° C sein.

Üblicherweise ist das polymere Bindemittel II in einer Menge von 5 bis 97 Gew.-%, bevorzugt in einer Menge von 10 bis 80 Gew.-%, besonders bevorzugt von 20 bis 50 Gew.-%, jeweils bezogen auf die Summe aller Bestandteile des Festelektrolyten A1 enthalten.

Der erfindungsgemäße Festelektrolyt kann darüber hinaus mindestens ein Leitsalz III enthalten.

Als Kationen für das Leitsalz kommen beispielsweise H⁺, Li⁺, Na⁺, K⁺, Cs⁺, Mg²⁺ oder Ag⁺ in Frage. Bevorzugtes Kation im Rahmen der vorliegenden Erfindung ist H⁺ oder Li⁺. Beispiele für geeignete Leitsalze III sind LiCl, LiPF₆, LiBF₄, LiAsF₆, LiCF₃SO₃, LiC(CF₃SO₂)₃, LiN(CF₃SO₂)₂ Li(CₙF₂ₙ₊₁)SO₃, LiC[(CₙF₂ₙ₊₁)SO₂]₃, LiN[CₙF₂ₙ₊₁)SO₂]₂, mit n jeweils 2 bis 20, LiClO₄, LiN(SO₂F)₂, LiSbF₆, LiAlCl₄, LiSiF₆, NaPF₆, NaBF₄, NaCF₃SO₃, NaClO₄, KPF₆, KBF₄, KCF₃SO₃ oder AgCF₃SO₃. Es können auch organische Salze wie beispielsweise Natriumoctylsulfat, Lithiumdodecylbenzolsulfat eingesetzt werden. Bevorzugt wird als Leitsalz LiClO₄, LiN(CF₃SO₂)₂ oder LiCF₃SO₃ eingesetzt. Erfindungsgemäß können auch Gemische zweier oder mehrerer Leitsalze eingesetzt werden.

Im Rahmen der vorliegenden Erfindung kann der Festelektrolyt A1 aber auch polymergebundende ionische Gruppen aufweisen. Insbesondere sind erfindungsgemäß polymergebundende Säureanionen bevorzugt, die H⁺ oder Li⁺ Gegenionen haben. Erfindungsgemäß kann der Festelektrolyt A1 auch polymergebundende ionische Gruppen und ein Leitsalz III enthalten.

Üblicherweise ist das Leitsalz III in einer Menge von 0,5 bis 40 Gew.-% bezogen auf die Summe aller Bestandteile des Festelektrolyten A1 enthalten. Bevorzugt enthält der Festelektrolyt A1 1 bis 20 Gew.-% des Leitsalzes III, besonders bevorzugt 2 bis 8 Gew.-%.

Enthält der Festelektrolyt A1 polymergebundende ionische Gruppen, entspricht die Summe der ionischen Gruppen bevorzugt 0,05 bis 4 Mol/l, insbesondere 0,1 bis 2 Mol/l, besonders bevorzugt 0,2 bis 0,8 Mol/l.

Der erfindungsgemäße Festelektrolyt A1 kann darüber hinaus auch Weichmacher enthalten. Als Weichmacher kommen übliche, hochsiedende Weichmacher oder Lösungsmittel in Frage. Vorteilhaft werden solche Weichmacher eingesetzt, die Ionen, insbesondere Li-Ionen solvatisieren können. Die Weichmacher fungieren einerseits als Lösemittel für die Leitsalze und beeinflussen weiterhin die mechanischen Eigenschaften des Festelektrolyten, beispielsweise durch Erniedrigung von dessen Glasübergangstemperatur. Geeignete mit dem jeweils eingesetzten Bindemittel und Füllstoff verträgliche Weichmacher werden vom Fachmann ausgewählt. Dabei ist zu beachten, dass der Weichmacher die Transparenz des Festelektrolyten nicht wesentlich beeinträchtigen darf. Es können sowohl protische wie aprotische Weichmacher eingesetzt werden. Beispiele für protische Weichmacher sind Glykol sowie über endständige OH-Gruppen verfügende oligomere Polyethylenglykole oder Polypropylenglykole. Derartige Weichmacher sind beispielsweise unter dem Handelsnamen Pluriol® erhältlich. Es können auch primäre Alkohole wie beispielsweise 2-Ethylhexanol eingesetzt werden.

Beispiele für aprotische Weichmacher sind lineare oder cyclische organische Carbonate der allgemeinen Formel R⁴O(CO)OR⁵, wobei R⁴ und R⁵ jeweils für gradkettige oder verzweigte Alkylreste oder Arylreste stehen, die auch noch inerte Substituenten, wie z.B. Chlor oder Brom tragen können. Gut geeignet sind insbesondere solche Carbonate mit 1 bis 6 Kohlenstoffatomen. R⁴ und R⁵ können auch zu einem z.B. 5- oder 6-gliedrigem Ring miteinander verbunden sein. Es können auch C-Atome durch O-Atome substituiert sein. Beispiele für derartige Carbonate sind Ethylencarbonat, Propylencarbonat, Butylencarbonat, Diethylcarbonat, Dipropylcarbonat, Diisopropylcarbonat, Dibutylcarbonat, Di(2-methoxyethyl)carbonat oder Di(2-butoxyethyl)carbonat. Geeignet sind auch organische Phosphate R'R"R'''PO₄ wobei R', R" und R''' jeweils für gradkettige oder verzweigte Alkylreste mit 1 bis 8 Kohlenstoffatomen oder für Arylreste stehen, die auch noch weiter substituiert sein können. Insbesondere können auch C-Atome durch O-substituiert sein. R', R" und R"' können auch paarweise zu einem Ring miteinander verbunden sein. Beispiele geeigneter Phosphate sind Trimethylphosphat, Triethylphosphat, Tripropylphosphat, Tributylphosphat, Triisobutylphosphat, Tripentylphosphat, Trihexylphosphat, Tnoctylphosphat, Tris(2-ethylhexyl)phosphat, Tridecylphosphat, Diethyl-n-butylphosphat, Tris(butoxyethyl)phosphat, Tris(2-methoxyethyl)phosphat, Tris(tetrahydrofuryl)phosphat, Tris(1H,1H,5H-octafluorpentyl)phosphat, Tris(1H,1H-trifluorethyl)phosphat, Tris(2-(diethylamino)ethyl)phosphat, Tris-(methoxyethoxyethyl)phosphat, Tris(ethoxycarbonyloxyethyl)phosphat oder Trikresylphosphat.

Als Weichmacher geeignet sind auch Ester organischer Säuren, beispielsweise Ester der Adipinsäure oder Phthalsäure wie 2-Ethylhexyladipat oder 2-Ethylhexylphthalat. Vorteilhaft können cyclische Ester wie omega-(+/-)-Butyrolacton, Dimethyl-omega-butyrolacton, Diethyl-omega-butyrolacton, omega-Valerolacton, 4,5-Dimethyl-1,3-dioxolan-2-on, 4,4-Dimethyl-1,3-dioxolan-2-on, 4-Ethyl-1,3-dioxolan-2-on, 4-Methyl-5-ethyl-1,3-dioxolan-2-on, 4,5-Diethyl-1,3-dioxolan-2-on, 4,4-Diethyl-1,3-dioxolan-2-on, 1,3-Dioxan-2-on, 4-Methyl-1,3-dioxan-2-on, 5-Methyl-1,3-dioxan-2-on, 4,4-Dimethyl-1,3-dioxan-2-on, 5,5-Dimethyl-1,3-dioxan-2-on, 4,6-Dimethyl-1,3-dioxan-2-on oder 4,4,6-Trimethyl-1,3-dioxan-2-on, 5,5-Diethyl-1,3-dioxan-2-on verwendet werden. Vorteilhaft sind auch Ester anorganischer Säuren einsetzbar, die über -(CH₂-CH₂O)ₙCH₃-Gruppen verfügen, insbesondere Ester der Borsäure, Kohlensäure, Schwefelsäure und Phosphorsäure. Ester der genannten Art sind von WO 98/44576, Seite 27 bis 31 offenbart. Es können auch Ether eingesetzt werden, wie beispielsweise Dibutylether, Dihexylether, Diheptylether, Dioctylether, Dinonylether, Didecylether, Didodecylether, Ethylenglykoldimethylether, Ethylenglykoldiethylether, 1,2-Dimethoxypropan, Diethylenglykoldibutylether, Triethylenglykoldimethylether, Tetraethylenglykoldimethylether oder Polyglykolalkylether, Tetrahydropyran, 1,4-Dioxan, 1,3-Dioxan, 2,5-Diethoxytetrahydrofuran oder 2,5-Dimethoxytetrahydrofuran. weiterhin geeignet sind auch Dimethylformid N-Methylpyrrolidon oder Acetonitril. Es können auch Mischungen verschiedener Weichmacher im Festelektrolyten A1 vorhanden sein.

Üblicherweise ist der Weichmacher in einer Menge von 0 bis 90 Gew.-% bezogen auf die Summe aller Bestandteile des Festelektrolyten enthalten. Bevorzugt enthält der Festelektrolyt 1 bis 70 Gew.-%, insbesondere 10 bis 50 Gew.-% des Weichmachers, besonders bevorzugt 20 bis 40 Gew.-%.

Der erfindungsgemäße Festelektrolyt A1 kann darüber hinaus weitere Zusatzstoffe und Hilfsmittel enthalten. Beispielsweise können Antioxidantien wie beispielsweise Irganox®, Ultranox® oder Sicostab®, UV-Stabilisatoren, wie beispielsweise Uvinul® oder Irgastab® vorhanden sein. Weiterhin können Dispergierhilfsmittel wie beispielsweise Lutensol® oder Sokalan® für den Füllstoff oder Haftvermittler eingesetzt werden.

Die Menge an Zusatzstoffen und Hilfsmitteln kann vom Fachmann je nach Bedarf gewählt werden. Erfindungsgemäß ist der Anteil der Zusatzstoffe und Hilfsmittel bezogen auf die Summe der Bestandteile des Festelektrolyten A1 aber nicht größer als 30 Gew.-%, bevorzugt nicht größer als 20 Gew.-%, insbesondere nicht größer als 10 Gew.-%.

In einer bevorzugten Ausführungsform der Erfindung liegt die Schicht A, die wenigstens den Festelektrolyten A1 enthält, als Folie vor. Die Dicke der Folie wird je nach dem gewünschten Anwendungszweck gewählt. Beispielsweise können die Folien Dicken zwischen 5 µm und 5 mm aufweisen. Bevorzugt weisen die Folien eine Dicke von 10 um und 2 mm auf, insbesondere von 100 µm bis 1,5 mm, besonders bevorzugt von 0,5 bis 1 mm.

Der erfindungsgemäße Festelektrolyt A1 kann unvernetzt sein, er kann aber auch vernetzt vorliegen. Im letzteren Falle enthält er noch die Reaktionsprodukte von zur Vernetzung zugegebenen Verbindungen, also beispielsweise die aus der Photopolymerisation von ethylenisch ungesättigten Verbindungen mit geeigneten Photoinitiatoren resultierenden Polymere.

Alle Bestandteile des erfindungsgemäßen Festelektrolyts A1 bilden eine homogene, bevorzugt eine farblose und glasklare Masse. Der Füllstoff I ist dabei vorzugsweise gleichmäßig im Bindemittel II dispergiert und das Leitsalz III vorzugsweise vollständig gelöst. Die Lichtabsorption des Festelektrolyten A1 und auch der Schicht A ist bevorzugt kleiner als 20%, besonders bevorzugt kleiner als 15 %. Der erfindungsgemäße Festelektrolyt A1 bzw. die Schicht A kann im Rahmen der vorliegenden Erfindung aber auch milchig, also höhere Streuanteile aufweisend, oder gefärbt sein, wenn dies für eine bestimmte Anwendung erforderlich ist.

Der Festelektrolyten A1 kann beispielsweise durch Schmelzextrusion hergestellt werden. Die Erfindung umfaßt aber auch andere Vorgehensweisen, wie beispielsweise alle Bestandteile bis auf den Füllstoff in einem geeigneten Lösemittel zu lösen, den Füllstoff darin gleichmäßig zu dispergieren, eine Schicht auf ein geeignetes Substrat zu gießen und das Lösemittel wieder zu verdampfen.

Eine weitere, wenngleich nicht bevorzugte Verfahrensvariante ist es, den Festelektrolyten A1 zunächst ohne das Leitsalz III herzustellen, und das Leitsalz III erst zu einem späteren Zeitpunkt durch Tränken des Festelektrolyten A1 mit einer Lösung des Leitsalzes in einem geeigneten Lösungsmittel einzubringen.

Der erfindungsgemäße Festelektrolyt A1 kann auch vernetzt werden. Die Vernetzung kann thermisch erfolgen, indem den Ausgangsmaterialien thermische Vernetzter zugegeben werden, die bei der Verfahrenstemperatur der Schmelzextrusion noch nicht vemetzen. Nach der Ausformung wird die Vernetzung durch Erwärmen des Formkörpers oder der Folie auf höhere Temperaturen ausgelöst. Bevorzugt wird aber eine Strahlungsvernetzung durchgeführt. Dazu nötige Vernetzer oder Hilfsmittel, wie beispielsweise Phtoinitiatoren werden den Ausgangsmaterialien zugegeben und mit diesen compoundiert und schmelzextrudiert. Die Strahlungsvemetzung kann beispielsweise durch Bestrahlung mit energiereicher Strahlung, wie ionischer Strahlung, ionisierender Strahlung, Elektronenstrahlen, Röntgen- oder gamma-Strahlen, gegebenenfalls unter Einsatz zusätzlicher Initiatoren erfolgen. Vorteilhaft wird die Vernetzung mit aktinischem Licht, insbesondere mit UV-Licht durchgeführt. Hierzu werden in bekannter Weise polymerisierbare Verbindungen, beziehungsweise Monomere eingesetzt. Die Monomeren weisen mindestens eine polymerisierbare ethylenische Doppelbindung auf. Die Auswahl von Art und Menge richtet sich dabei nach den gewünschten Eigenschaften des Festelektrolyten sowie der Verträglichkeit mit den anderen Komponenten, insbesondere mit dem Bindemittel. Geeignet sind dabei insbesondere polare Monomere, die Ionen binden bzw. solvatisieren und somit zur Leitfähigkeit beitragen können. Als Beispiele bevorzugter Verbindungen seien solche mit Hydroyxigruppen, Amidgruppen oder Polyethylenglykolstruktureinheiten genannt. Sehr geeignet sind auch Mono- und Polyacrylate und/oder -methacrylate von ein und mehrwertigen Alkoholen. Beispielsweise können eingesetzt werden (Meth)acrylsäurester von Alkanolen mit 1 bis 20 Kohlenstoffatomen, wie Methyl (meth)acrylat, Ethyl(meth)acrylat, Propyl(meth)acrylat, Isopropyl(meth)acrylat, Cyclohexyl(meth)acrylat; (Meth)acrylester mehrwertiger Alkohole mit 2 bis 20 Kohlenstoffatomen, z.B. 2-Hydroxy-ethyl(meth)acrylat, 2-Hydroxypropyl(meth)acrylat, Ethylenglykoldi(meth)acrylat, Butandioldi(meth)acrylat, Polyethylenglykoldi(meth)acrylat oder 1,1,1-Trimethylol-propantri(meth)acrylat, des weiteren Polyethylenglykolmono(meth)acrylat-monomethylether und 2-Diethylaminoethylacrylat. Geeignet sind auch Epoxid- und Urethan(meth)acrylate, wie sie z.B. durch Umsetzung von Bisphenol-Adiglycidylether mit (Meth)acrylsäure oder durch Umsetzung von Mono- oder Diisocyanaten mit Hydroxyalkyl(meth)acrylaten und ggf. mit hydroxylgruppenhaitigen Polyestern oder Polyethern erhalten werden können. Ebenso eignen sich Derivate des Acrylamids und des Methacrylamids, z.B. Ether ihrer N-Methylolderivate mit ein und mehrwertigen Alkoholen, wie z.B. Ethylenglykol, Glycerin, 1,1,1-Trimethylolpropan, oligomeren oder polymeren Ethylenoxidderivaten.

Als Initiatoren für die Photopolymerisation sind unter anderen Benzoin oder Benzoinderivate, wie alpha-Methylbenzoin oder Benzoinether, Benzilderivate, wie Benzilketale, Acylarylphosphinoxide, Acylarylphosphinsäureester, Mehrkernchinone oder Benzophenone geeignet.

Die Vernetzung mit aktinischen Licht kann unmittelbar nach der Herstellung des Festelektrolyten A1 erfolgen, also beispielsweise, indem die durch Extrusion hergestellte Festelektrolyt-Folie mit einer geeigneten Bestrahlungsvorrichtung unmittelbar hinter dem Extruder bestrahlt und vernetzt wird. Sie kann aber auch erst zu einem späteren Zeitpunkte, beispielsweise erst nach dem Einbau in eine elektrochrome Verglasung vernetzt werden.

Der erfindungsgemäße Verbundkörper weist mindestens eine haftvermittelnde Schicht B mit einer Dicke <100 µm auf. Prinzipiell können alle dem Fachmann bekannten haftvermittelnden Schichten eingesetzt werden. Besonders vorteilhaft als haftvermittelnde Schicht B sind Schichten enthaltend mindestens 33 Gew.-%, bezogen auf die gesamte haftvermittelnde Schicht B, eines modifizierten Polyvinylalkohols. Erfindungsgemäß können auch Gemische aus zwei oder mehr verschiedenen modifizierten Polyvinylalkoholen eingesetzt werden, wobei die Summe verschiedenen modifizierten Polyvinylalkohole mindestens 33 Gew.-% der haftvermittelnden Schicht B ausmacht. Die haftvermittelnde Schicht kann erfindungsgemäß insbesondere auch mehr als 50 Gew.-%, bevorzugt mehr als 80 Gew.-%, besonders bevorzugt mehr als 95 Gew.-%, jeweils bezogen auf die gesamte haftvermittelnde Schicht B, eines modifizierten Polyvinylalkohols oder eines Gemisches aus zwei oder mehr davon enthalten.

Bevorzugt sind im Rahmen der vorliegenden Erfindung insbesondere Acetale, Halbacetale oder Ketale eines Polyvinylalkohols, beispielsweise Polyvinylbutyral. Es können im Rahmen der vorliegenden Erfindung aber beispielsweise auch Schichten enthaltend Polyethylenoxid eingesetzt werden.

Daher betrifft die vorliegende Erfindung in einer bevorzugten Ausführungsform einen Verbundkörper mit einer haftvermittelnden Schicht B enthaltend mindestens 33 Gew.-% eines Acetals eines Polyvinylalkohols, eines Ketals eines Polyvinylalkohols oder eines Halbacetals eines Polyvinylalkohols oder eines Gemisches aus zwei oder mehr davon ist.

Erfindungsgemäß hat die haftvermittelnde Schicht B eine Dicke von < 100 µm, insbesondere von 0,01 µm bis 10 µm, besonders bevorzugt von 0,1 µm bis 5 µm, beispielsweise von 0,1 µm bis 4 µm. Die erfindungsgemäß sehr dünne haftvermittelnde Schicht B führt zu einer deutlich verbesserten Adhäsion der einzelnen Schichten des erfindungsgemäßen Verbundkörpers, beeinflußt jedoch die Leitfähigkeit zwischen den Schichten nur unwesentlich.

Die haftvermittelnde Schicht B kann beispielsweise aus Lösung aufgebracht werden. Es ist jedoch ebenso möglich, dass die haftvermittelnde Schicht B aufpolymerisiert oder aufgedampft wird oder dass die haftvermittelnde Schicht B als Film aufgebracht wird. Erfindungsgemäß bevorzugt ist es, dass die haftvermittelnde Schicht B aus Lösung aufgebracht wird.

In einer weiteren Ausführungsform betrifft die Erfindung einen Verbundkörper, wobei die haftvermittelnde Schicht B eine Schicht enthaltend mindestens 33 Gew.-% Polyvinylbutyral, bezogen auf die gesamte haftvermittelnde Schicht B, ist.

Durch die haftvermittelnde Schicht B weist ein erfindungsgemäßer Verbundkörper auch eine verbesserte Bruchsicherheit auf. Dies ist insbesondere bei der Verwendung der erfindungsgemäßen Verbundkörper in Verglasungen vorteilhaft.

Der erfindungsgemäße Verbundkörper weist weiterhin mindestens eine Komponente C, die dem Verbundkörper elektrochrome Eigenschaften verleiht, auf. Im Rahmen der vorliegenden Erfindung können als Komponente C prinzipiell alle dem Fachmann bekannten Verbindungen verwendet werden, die dem Verbundkörper elektrochrome Eigenschaften verleihen, d.h. insbesondere zu einer Farbänderung im sichtbaren Bereich bei Anlegen einer Spannung führen. Beispielsweise können als Komponente C redoxaktive elektrochrome Verbindungen verwendet werden. Sofern die Komponente C in einer Schicht CI vorliegt, ist besonders WO₃ bevorzugt.

In einer bevorzugten Ausführungsform betrifft die Erfindung daher einen Verbundkörper umfassend eine Schicht CI, die als Komponente C WO₃ enthält.

Sofern der erfindungsgemäße Verbundkörper die mindestens eine Komponente C in einer Schicht CI enthält, weist ein erfindungsgemäßer Verbundkörper vorzugsweise eine weitere Schicht CII auf, die CeTiO₂, V₂O₅, TiV₂O₅, CrV₂O₅, NbV₂O₅, Ni(OH)₂, Nb₂O₅ oder Ir₂O₂ oder ein Gemisch aus zwei oder mehr dieser Verbindungen enthält, wobei diese auch zusätzlich andere Metallatome in ihrem Gitter intercaliert enthalten können.

Insbesondere enthält die weitere Schicht CII bevorzugt CeTiO₂, V₂O₅, TiV₂O₅ oder Ni(OH)₂ oder ein Gemisch aus zwei oder mehr dieser Verbindungen.

Daher betrifft die vorliegende Erfindung auch einen Verbundkörper, der eine weitere Schicht CII enthaltend CeTiO₂, V₂O₅, TiV₂O₅, CrV₂O₅, NbV₂O₅, Ni(OH)₂, Nb₂O₅ oder Ir₂O₂ oder Gemische aus zwei oder mehr dieser Verbindungen aufweist.

Neben der Schicht A, die wenigstens einen Festelektrolyt A1 enthält, der haftvermittelnden Schicht B und der Komponente C, die dem Verbundkörper elektrochrome Eigenschaften verleiht, kann der erfindungsgemäße Verbundkörper auch noch weitere Schichten aufweisen. Insbesondere kann ein erfindungsgemäßer Verbundkörper noch weitere optisch transparente Trägerschichten, beispielsweise aus Glas oder optisch transparenten Polymeren, sowie eine oder mehrere Leitfähigkeitsschichten D aufweisen. Die Leitfähigkeitsschicht kann beispielsweise eine ITO(Indium-Tin-Oxide)-Schicht, eine FTO(Fluor dotiertes Zinnoxid)-Schicht oder eine ATO(Antimon dotiertes Zinnoxid)-Schicht sein.

In einer bevorzugten Ausführungsform betrifft die vorliegende Erfindung daher auch einen Verbundkörper, der zusätzlich eine oder mehrere Leitfähigkeitsschichten D aufweist.

Vorzugsweise weist der Verbundkörper im Rahmen der vorliegenden Erfindung mindestens eine Trägerschicht auf, die vorzugsweise eine starre dünne Schicht, beispielsweise aus Glas, ist. Es ist im Rahmen der vorliegenden Erfindung jedoch ebenso möglich, dass die Trägerschicht eine starre dünne Schicht, aus einem optisch transparenten Polymer ist. Unter optisch transparent wird verstanden, dass die Lichtabsorption der Schicht im sichtbaren Bereich <20 % ist.

Ein erfindungsgemäßer Verbundkörper kann beispielsweise hergestellt werden, indem die einzelnen Schichten miteinander in Kontakt gebracht werden. Es ist im Rahmen der vorliegenden Erfindung möglich, dass auf die Schicht A die Haftvermittelnde Schicht B aufgebracht wird, auf die wiederum eine Schicht CI enthaltend die Komponente C aufgebracht wird.

Vorzugsweise wird die haftvermittelnde Schicht aus Lösung aufgebracht. Hierbei können prinzipiell alle Beschichtungsverfahren angewandt werden. Geeignet sind im Rahmen der vorliegenden Erfindung zum Aufbringen der haftvermittelnden Schicht B beispielsweise Gießverfahren, Tauchverfahren, Sprühverfahren, Schleuderverfahren oder auch Aufwalzen oder -rakeln.

Erfindungsgemäß ist es insbesondere bevorzugt, dass zunächst die Trägerschicht mit der Leitfähigkeitsschicht D in Kontakt gebracht wird. Vorzugsweise wird anschließend die Schicht CI enthaltend die Komponente C aufgebracht. Auf diese Schicht wird vorzugsweise eine haftvermittelnde Schicht B aufgebracht. Die Schicht A enthaltend einen Festelektrolyten A1 kann beispielsweise anschließend als Polymerfolie aufgebracht, insbesondere aufgewalzt, werden. Vorzugsweise wird die Schicht A bei einer Temperatur von 0°C bis 140°C, beispielsweise von 25°C bis 140°C aufgebracht. Es ist erfindungsgemäß insbesondere bevorzugt, dass eine weitere haftvermittelnde Schicht B und eine weitere Schicht CII auf den Verbundkörper aufgebracht werden. Auf diese weitere Schicht CII kann eine zweite Trägerschicht, die ebenfalls mit einer Leitfähigkeitsschicht D beschichtet ist, aufgebracht werden.

In einer besonders bevorzugten Ausführungsform der vorliegenden Erfindung wird eine Trägerschicht mit der Leitfähigkeitsschicht D in Kontakt gebracht, und anschließend die Schicht CI enthaltend mindestens eine Komponente C aufgebracht. Auf diese Schicht wird eine haftvermittelnde Schicht B aufgetragen, auf die wiederum die Schicht A wenigstens enthaltend einen Festelektrolyten A1 aufgebracht. Eine zweite Trägerschicht wird ebenfalls mit einer Leitfähigkeitsschicht D in Kontakt gebracht, und anschließend die weitere Schicht CII aufgebracht. Auf diese Schicht wird eine haftvermittelnde Schicht B aufgetragen. Diese zwei derartig beschichteten Träger werden anschließend miteinander in Kontakt gebracht. Im Rahmen der vorliegenden Erfindung werden die zwei derartig beschichteten Träger vorzugsweise durch Naßlaminieren oder durch Heißlaminieren miteinander verbunden.

Die vorliegende Erfindung betrifft auch eine Verfahren zur Herstellung eines erfindungsgemäßen Verbundkörpers oder eines elektrochromen Fensters oder einer Verglasung, bei dem die einzelnen Schichten miteinander in Kontakt gebracht werden.

In einer bevorzugten Ausführungsform betrifft die vorliegende Erfindung ein Verfahren, bei dem die haftvermittelnde Schicht aus Lösung aufgebracht wird.

Die erfindungsgemäßen Verbundkörper eignen sich insbesondere für die Verwendung in elektrochromen Fenstern oder Displays. Die vorliegende Erfindung betrifft daher auch die Verwendung eines erfindungsgemäßen Verbundkörpers in elektrochromen Fenstern bzw. Verglasungen sowie in Displays.

Darüber hinaus betrifft die vorliegende Erfindung auch elektrochrome Fenster und Verglasungen für Automobile oder Gebäude, umfassend einen erfindungsgemäßen Verbundkörper.

Es ist beispielsweise auch möglich, dass eine Verglasung umfassend einen erfindungsgemäßen Verbundkörper durch Anlegen eines Wechselstroms geheizt werden kann. Diese zusätzliche Funktion neben der Gleichstromschaltung für die elektrochrome Verglasung ist insbesondere für Verglasungen für Automobile vorteilhaft.

Im folgenden soll die vorliegende Erfindung nunmehr anhand von Beispielen näher erläutert werden.

### BEISPIELE

### Herstellungsbeispiel

Eine Glasplatte mit Leitfähigkeitsbeschichtung (TEC 15/3 Glas von Fa. Pilkington) und einer aufgesputterten 0,4 µm dicken WO₃-Schicht wurde in eine Lösung von 40 Gewichtsteilen Polyvinylbutyral (Fa. Clariant) in 960 Gewichtsteilen Tetrahydrofuran getaucht und mit einer Ziehgeschwindigkeit von 0,5 cm / Sekunde tauchbeschichtet, wobei nach 30 minütiger Trocknung bei 100°C eine ca. 0,003 mm dicke Polyvinylbutyralschicht auf dem Glas verblieb.

Eine zweite TEC 15/3 Glasplatte mit einer 0,4 µm dicken aufgesputterten Schicht von V₂O₅ wurde dann ebenso mit 0,003 mm Polyvinylbutyral tauchbeschichtet.

Ein 0,8 mm dicker Polymerelektrolytfilm, der durch Extrusion zwischen Polyesterschutzfolien aus 30 Gewichtsteilen Polymethylmethylmethacrylat, 35 Gewichtsteilen pyrogener hyrophobierter Kieselsäure (Aerosil®-R8200), 30 Gewichtsteilen Tetraethylenglykoldimethylether und 5 Gewichtsteilen Leitsalz Lithiumperchlorat hergestellt wurde, wurde nach Entfernung einer der Schutzfolien mit Hilfe eines Rollenlaminators bei 100°C Walzentemperatur und bei eine Geschwindigkeit von 1 m pro Minute auf die erste Glasplatte so auflaminiert, dass die Polymerelektrolytschicht mit der WO₃ Schicht lufteinschlussfrei laminiert wurde.

Nach Abziehen der zweiten Schutzfolie wurde diese Glasplatte dann in gleicher Art in dem Rollenlaminator mit der zweiten Glasscheibe (mit der V₂O₅-Beschichtung) zu einer Verbundglasscheibe zusammen laminiert. Als alternatives Laminierverfahren konnte auch statt der Heißlaminierung eine Nasslaminierung erfolgen, oder aber beide Verfahren konnten gemischt angewendet werden. Dazu wurde z.B. die Glasplatte mit der Polymerelektrolytschicht nach oben in eine flache Schale mit Weichmacher (z.B. Tetraethylenglykoldimethylether; z.T. auch Leitsalz enthaltend) untergetaucht. Unmittelbar darauf wurde die zweite Glassplatte mit der V₂O₅ Beschichtungsseite nach unten unter Vermeidung des Eintrags von Luftblasen auf die erste Glasscheibe aufgelegt. Unter beständigem Anpressdruck wurde dieser Plattenverbund dem Kaschierbad entnommen. Die Haftung bildete sich durch Wegschlagen des Weichmachers in die Polymerelektrolytschicht innerhalb weniger Sekunden aus und erreichte den Endwert nach dem Tempern der Verbundglasscheibe (bei 80°C bis 160°C; Zeitdauer je nach Temperatur: Stunden bis Minuten).

Bei der Verbundglasscheibe dieses Beispiels wurde die erste Laminierung im Heißlaminierverfahren und die zweite Laminierung im Nasslaminierverfahren hergestellt (Laminierflüssigkeit: Tetraethylenglykoldimethylether ohne Leitsalz; Temperung: eine Stunde bei 100°C).

Zur Charakterisierung der Haftung wurde die Schälhaftung mittels einer Universalprüfmaschine der Fa. Zwick, Modell ETZW 1435, auf den beiden Glasplatten bei zur Glasoberfläche lotrechter Abzugsrichtung an den beiden Halblaminaten auf WO₃ und V₂O₅ gemessen. Halblaminate waren jeweils die Polymerelektrolytfilme, die mit der WO₃ bzw. der V₂O₅-Glasscheibe, wie oben beschrieben, laminiert wurden, aber anstelle der zweiten Glasscheibe mit einer Polyesterfolie (Selbstklebeband mit hoher Haftung) verklebt wurden. Das überstehende Ende dieses Klebebandes wurde in die obere Abziehzange der Zugprüfmaschine eingespannt, während die untere Abziehzange an einem Rollenschlitten angriff, mit dem die Glasplatte horizontal geführt wurde. Der Durchmesser der Walzen dieses Rollenschlittens betrug 10 mm.

### Haftungsmessungen an 1,5 cm breiten Halblaminatstreifen:

Haftung auf der WO₃-Schicht:11 [N/1,5 cm]
Haftung auf der V₂O₅-Schicht 9 [N/1,5 cm]
Charakterisierung der Polymerelektolyt-Leitfähigkeit durch Impedanzmessung zwischen Platinelektroden: 0,0005 [S/cm] bei 28°C

### Charakterisierung der Glasbruchfestigkeit:

Kugelfalltest einer 250g Stahlkugel aus 3 m Höhe auf eine 30*30 cm Verbundglasscheibe dieses Beispiels: die Kugel wurde von der Glasscheibe gestoppt, keine großen Glassplitter: Test bestanden.

### Vergleichsbeispiel:

Es wurde genauso wie im obigen Beispiel beschrieben verfahren mit der einzigen Ausnahme, dass anstelle der mit Polyvinylbutyral lackierten Glasscheiben nicht PVB-lackierte Glasscheiben verwendet wurden.

### Haftungsmessungen an 1,5 cm breiten Halblainatstreifen:

Haftung auf der WO₃-Schicht: 0,4 [N/1,5 cm]
Haftung auf der V₂O₅-Schicht 0,3 [N/1,5 cm]
Charakterisierung der Polymerelektrolyt-Leitfähigkeit durch Impedanzmessung zwischen Platinelektroden: 0,0006 [S/cm] bei 25°C

### Charakterisierung der Glasbruchfestigkeit:

Kugelfalltest einer 250g Stahlkugel aus 3 m Höhe auf eine 30*30 cm Verbundglasscheibe dieses Vergleichsbeispiels: die Kugel fiel durch die Glasscheibe hindurch, größere Glassplitter flogen umher, der Test wurde nicht bestanden.

## Patentansprüche

1. Verbundkörper, umfassend
A) mindestens eine Schicht A wenigstens enthaltend einen Festelektrolyten A1, der mindestens folgende Komponenten enthält:
i) mindestens einen Füllstoff I mit einer Primärpartikelgröße von 1 nm bis 20 µm,
ii) mindestens ein polymeres Bindemittel II,
B) mindestens eine haftvermittelnde Schicht B mit einer Dicke < 100 µm;
C) mindestens eine Komponente C, die dem Verbundkörper elektrochrome Eigenschaften verleiht.

2. Verbundkörper nach Anspruch 1, **dadurch gekennzeichnet, dass** die mindestens eine Komponente C in einer Schicht CI im Verbundkörper vorliegt.

3. Verbundkörper nach Anspruch 1 oder 2, **dadurch gekennzeichnet, dass** der Festelektrolyt A1 mindestens eine der Eigenschaften (1) bis (3) aufweist:
(1) Lichtabsorption < 20%,
(2) Leitfähigkeit bei 20 °C größer als 10⁻⁷ S/cm,
(3) Glasübergangstemperatur T_{g} < -30°C.

4. Verbundkörper nach Anspruch 3, **dadurch gekennzeichnet, dass** der Festelektrolyt A1 alle der Eigenschaften (1) bis (3) erfüllt.

5. Verbundkörper nach einem der vorherigen Ansprüche, **dadurch gekennzeichnet, dass** der Füllstoff I ein anorganischer Füllstoff mit einer Primärpartikelgröße von 1 nm bis 300 nm ist.

6. Verbundkörper nach einem der vorherigen Ansprüche, **dadurch gekennzeichnet, dass** die Komponente C WO₃ ist.

7. Verbundkörper nach einem der vorherigen Ansprüche, **dadurch gekennzeichnet, dass** der Verbundkörper eine weitere Schicht CII enthaltend Ce-TiO₂, V₂O₅, TiV₂O₅, CrV₂O₅, NbV₂O₅, Ni(OH)₂, Nb₂O₅ oder Ir₂O₂ oder ein Gemisch aus zwei oder mehr dieser Verbindungen aufweist.

8. Verbundkörper nach einem der vorherigen Ansprüche, **dadurch gekennzeichnet, dass** die haftvermittelnde Schicht B eine Schicht enthaltend mindestens 33 Gew.-% eines Acetals eines Polyvinylalkohols, eines Ketals eines Polyvinylalkohols oder eines Halbacetals eines Polyvinylalkohols oder eines Gemisches aus zwei oder mehr davon ist.

9. Verbundkörper nach einem der vorherigen Ansprüche, **dadurch gekennzeichnet, dass** die haftvermittelnde Schicht B eine Schicht enthaltend mindestens 33 Gew.-% Polyvinylbutyral ist.

10. Verbundkörper nach einem der vorherigen Ansprüche, **dadurch gekennzeichnet, dass** der Verbundkörper zusätzlich eine oder mehrere Leitfähigkeitsschichten D aufweist.

11. Elektrochromes Fenster, umfassend einen Verbundkörper gemäß einem der Ansprüche 1 bis 10.

12. Verfahren zur Herstellung eines Verbundkörpers gemäß einem der Ansprüche 1 bis 10 oder eines elektrochromen Fensters gemäß Anspruch 11 oder einer Verglasung gemäß Anspruch 12, **dadurch gekennzeichnet, dass** die einzelnen Schichten miteinander in Kontakt gebracht werden.
